# EUROPEAN PATENT APPLICATION

(11) **EP 2 251 079 A1**
(43) Date of publication of application: **17.11.2010**
(21) Application number: 09159933.2
(22) Date of filing: 11.05.2009
(51) Int. Cl.: B01J 19/00

(54) **A micro-fluidic system and the use thereof**

(71) Applicant: Chemtrix B.V., 6163 JT Geleen (NL)
(72) Inventor: Van der Heijden, Rik, 6416 BR, Heerlen (NL)
(74) Representative: Renkema, Jaap

(57) **Abstract**

The present invention relates to a micro-fluidic system comprising:
a. a planar micro-fluidic device comprising a plurality of inlets and at least one outlet;
b. a holder comprising a first part being provided with a plurality of channels having first ends and second ends, the holder comprising a fixing means for clamping the micro-fluidic device;
c. sealing means being arranged to connect the plurality of inlets and the at least one out-let of the micro-fluidic device to the second ends of the plurality of channels;

**characterized in that** the sealing means are arranged such that a surface contact between the micro-fluidic device and the sealing means and a surface contact between the sealing means and the first part of the holder is established.

The present invention also relates to the use of such a micro-fluidic systems at high pressures and high temperatures.

## Description

The present invention relates to a micro-fluidic system comprising:
a. a planar micro-fluidic device comprising a plurality of inlets and at least one out-let;
b. a holder comprising a first part being provided with a plurality of channels having first ends and second ends, the holder comprising a fixing means for clamping the micro-fluidic device;
c. sealing means being arranged to connect the plurality of inlets and the at least one out-let of the micro-fluidic device to the second ends of the plurality of channels;

Micro-fluidic systems are defined as having at least one dimension in the sub-millimeter region. The word 'fluidic' is, in the context of the present invention construed as 'involving liquid and/or gaseous components'.

In W02004/022233 a modular micro-fluidic system has been described having at least one base board with a plurality of fluidly linked fluid supply apertures, optional intermediate level boards of equivalent construction, a plurality of micro-fluidic modules adapted to be detachably attached to the base board/ intermediate boards, each having one or more fluid inlets and/or outlets, and a plurality of fluid connections. Conveniently, the connections comprise releasable couplings, for example in the form of a channel means removably insertable into a suitable recess in such an inlet/outlet/aperture to effect a fluid tight communicating connection therebetween. Such a channel means conveniently comprises a tubular element, in particular a rigid tubular element, for example being parallel sided, for example being square or rectangular, polygonal, or alternatively having a circular or elliptical cross section, with any recess into which such a tubular element is to be received preferably being shaped accordingly.

Such a tubular element can be a separable and distinct unit. However, the tubular element preferably comprises a projecting ferrule integral with and projecting from a first aperture comprising either a fluid supply aperture in the base board or an inlet/outlet in the module, and adapted to be received in a recess comprised as a second aperture, correspondingly either an inlet/outlet in the module or a supply aperture in the base board. In particular the ferrule projects generally perpendicularly from a generally planar surface, to effect a fluid connection between a base board and module adapted to lie generally parallel when connected.

In a most preferred form, ferrules are provided which project above the surface of the base board to be received within recesses comprising the inlet/outlet apertures of modules to be attached thereto.

The ferrule system enables dead volume in fluid path between "chips" to be minimized. Use of ferrules allows higher density of interconnections than other fittings such as high-pressure liquid chromatography (HPLC) fittings and the like.

Ferrules can withstand high pressures. The ferrules ensure accurate mechanical alignment of fluid elements making accurate module placement easy.

A disadvantage of such ferrule systems is that when a micro-reactor system comprising such ferrule interconnections is operated at elevated pressures in combination with high temperatures, the ferrules will thermally expand. This thermal expansion is spatially restricted due to the tight fitting of the ferrules inside the recesses in the reactor chip and in the base or intermediate board. Therefore, the ferrules are deformed outside the elastic region of the material (plastic deformation), especially when the ferrules are of a rigid material. Such a plastic deformation of the ferrule material permanently changes the mechanical properties of the ferrule material, which therefore loses its sealing capability and the micro-reactor system starts to leak. Another disadvantage of the micro-fluidic systems described in W02004/022233 is that although the ferrules ensure accurate mechanical alignment of fluid elements, such element, which are for example the micro-reactor chip and the base board, need to be manufactured with very high alignment accuracy, i.e. the positions and sizes of the counteracting recesses in both the micro-reactor chip and the base board need to be very accurately tuned, in particular when a large number of connections have to be established.

It is an object of the present invention to provide a micro-reactor system that can be operated at a high pressures (up to 80 bar) in combination with high a temperature (up to 200°C) and for which system at least part of the above disadvantages are absent or at least mitigated.

This object has been achieved by a micro-reactor system according to the preamble, **characterized in that** the sealing means are arranged such that a surface contact between the micro-fluidic device and the sealing means and a surface contact between the sealing means and the first part of the holder is established.

The micro-fluidic device is clamped in the holder such that the sealing means deform within the elastic region of the material which compares to, dependent on the selected sealing material, uniaxial compression of the sealing means and hence reducing its thickness between 5%-40%, preferably between 10%-30%, more preferably between 15%-25%. In this way a fluid tight connection is established that can withstand high pressures. Heating the micro-fluidic system to said temperatures, the sealing means may thermally expand without being restricted by tight recesses wherein the sealing means is fitted, the absence of such thus preventing additional mechanical stresses caused by spatially restricted thermal expansion of the sealing means. The deformation of the sealing means therefore remains within the elastic region of the sealing material. Permanent changes of the mechanical properties of the sealing material due to plastic deformation are omitted or at least mitigated. Therefore the sealing means retains its sealing properties over a longer period of time and contributes to a substantially leak-free micro-fluidic system.

In an embodiment the first part of the holder is provided with a first recess for accommodating the micro-fluidic device. The second ends of the plurality of the channels are located in said first recess. The second ends of the plurality of channels are aligned with the corresponding inlets and outlets of the micro-fluidic device by placing the micro-fluidic device in the first recess, such that at least two vertical sides of the micro-fluidic device contact at least two vertical sides of the first recess in the first part of the holder. The sealing means between the plurality of inlets and the at least one outlet of the micro-fluidic device and the second ends of the plurality of channels in the first part of the holder not only ensures a fluid tight interconnection, but also decreases the required accuracy of the position (including the relative position between e.g. two inlets) and size of the plurality of inlets and the at least one outlet of the micro-fluidic device. The sealing means are provided with holes that on one side are connected to the second ends of the plurality of channels in the first part of the holder and on the other side to the plurality of inlets and the at least one outlet of the micro-fluidic device. These connections are however not made by fitting the sealing means in corresponding recesses in the micro-fluidic device and the first part of the holder. On the contrary, the connections are made by the earlier described surface contact between the micro-fluidic device and the sealing means and between the sealing means and the first part of the holder. The size of the holes in het sealing means determines the required accuracy of the (relative) position of the plurality of inlets and the at least one outlet of the micro-fluidic device: as long as the inlets and outlet(s) of the micro-fluidic device are located within the holes provided in the sealing means a fluid connection between the micro-fluidic device and the first part of the holder will be established. This embodiment provides an easy way of positioning the micro-fluidic device on the first part of the holder.

In an embodiment at least one second recess is provided within the first recess in the first part of the holder to accommodate the sealing means. The at least one second recess enables easy positioning of the sealing means. The second recesses are of such shape and size that thermal expansion of the compressed sealing means (see above) is not restricted, such that permanent change of mechanical properties due to plastic deformation of the sealing material is prevented or at least mitigated. Preferably the at least one second recess is a shallow recess, the recess for example having a depth that is between 5%-40%, preferably between 6%-20%, more preferably between 7-15% of the thickness of the sealing means.

In an embodiment the micro-reactor system according to the present invention, the planar micro-fluidic device has a thickness t₁, the sealing means has a thickness t₂, the first recess has a depth d₁, the at least one second recess has a depth d₂. The thicknesses and depths t₁, t₂, d₁ and d₂ satisfy the formulas d₁+d₂ ≤ t₁+t₂ and 0<d₂≤0.95*t₂.

The above ensures that the thickness of sealing means exceeds the depth of the at least one second recess, such that the sealing means can be compressed for at least 5% (of its original thickness). The above also ensures that the holder is capable of clamping the micro-fluidic device and capable of exerting the desired pressure on the sealing means in order to reduce its thickness with at least 5% in compression.

In an embodiment the first part of the holder is made of a material that is resistant against aggressive (e.g. corrosive) chemicals. Preferably the first part of the holder is manufactured of a polymeric material; the material for example comprises an epoxy polymer or polyaryletheretherketon (PEEK). PEEK is preferred as a material for the first part of the holder.

The first part of the holder may be a monolithic block provided with channels, or an assembly of layers. The latter has the advantage of easy cleaning and assembly.

In an embodiment the sealing means is of a chemically resistant, preferably elastic, material, for example comprising a perfluoroalkane polymer, preferably perfluoroethyleen, e.g. Perlast®. The sealing means may comprise at least one O-ring. The O-rings connect the plurality of inlets and the at least one outlet of the micro-fluidic device with second ends of the plurality of channels in the first part of the holder. When the micro-fluidic device is clamped in the holder, the O-rings are deformed within their elastic region and provide a sealed connection.

In an embodiment the fixing means comprises a lid which is operatively connected to the first part of the holder and arranged to clamp the micro-fluidic device. The fixing may be achieved by any suitable releasable attachment means, including without limitation bolts and nuts or screw fixings, bayonet fittings whether quick release or not, push and snap fit connectors, vacuum or mechanical clamping connections, releasable mutually engageable resilient hook and feit pads, hooks, clips etc.

The lid may be of a heat conducting material, for example steel. The advantage of a lid of a heat conducting material is better heat control of the micro-fluidic device. Another advantage of a steel lid is that the weight of it contributes to the clamping of the micro-fluidic device and allows stable positioning of the entire micro-fluidic system e.g. on a heating element, which may be in direct contact with the micro-fluidic device.

In an embodiment the micro-fluidic system comprises a plurality of connectors for connecting the first ends of the plurality of channels to a plurality of tubes. A plurality of tubes being arranged as feed tubes and being connected to the plurality of inlets of the micro-fluidic device. At least one of the plurality of tubes being connected to the at least one outlet of the micro-fluidic device. A typical connector may be a nut-and-ferrule connector.

The micro-fluidic device (a) may further comprise a reaction section (i.e. a micro-reactor) or a mixing section (i.e. a micro-mixer) or combinations thereof.

It is noted that the scope of the present invention is not limited to the above described embodiments. Combinations of features provides alternative embodiments according to the present invention.

A micro-fluidic system according to the present invention is suitable for use at a combination of high pressures at least up to 80 bar and high temperatures at least up to 200°C. The suitable temperature range being between -20°C and 200°C, preferably between 0°C and 195°C, more preferably between 80°C and 190°C. The micro-fluidic system according to the present invention may therefore comprise a heater, which may directly heat the micro-fluidic device by being in direct contact with it. The micro-fluidic system may be used to mix aggressive chemicals or to perform chemical reactions that involve aggressive chemicals (e.g. corrosive chemicals).

The invention will now be explained in more detail with reference to the following figures:
Fig. 1A shows a schematic representation of a side view of a micro-fluidic system according to the present invention;
Fig. 1B shows the schematic representation of Fig 1A after assembling;
Fig. 2A shows a schematic representation of a side view of an embodiment of the micro-fluidic system according to the present invention;
Fig. 2B shows the schematic representation of Fig 2A after assembling;
Fig. 3 shows a schematic representation of a top view of the lid of the holder according to the present invention;
Fig. 4A shows a schematic representation of the top view of an O-ring;
Fig. 4B shows a schematic representation of the side view of the O-ring of Fig 4A;
Fig. 4C shows a schematic representation of the side view of the O-ring of Fig 4A and 4B in a deformed state.

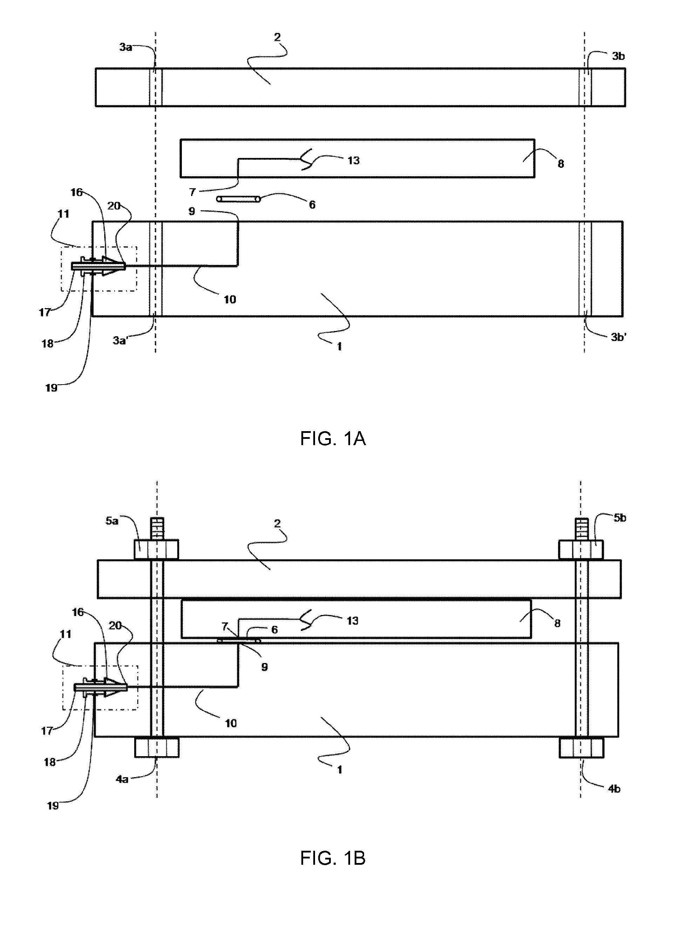

A micro-fluidic system according to the present invention is schematically shown in Fig. 1A. The system comprises a holder, comprising a first part (1) and a lid (2). Both the first part and the lid are provided with holes (3a, 3a') and (3b, 3b') which enable both parts to be operatively connected by e.g. bolts (4a, 4b) and nuts (5a, 5b) as shown in Fig. 1B. The fixing may be also be achieved by any other suitable releasable attachment means, e.g. screw fixings, bayonet fittings whether quick release or not, push and snap fit connectors, vacuum or mechanical clamping connections, releasable mutually engageable resilient hook and feit pads, hooks, clips etc.

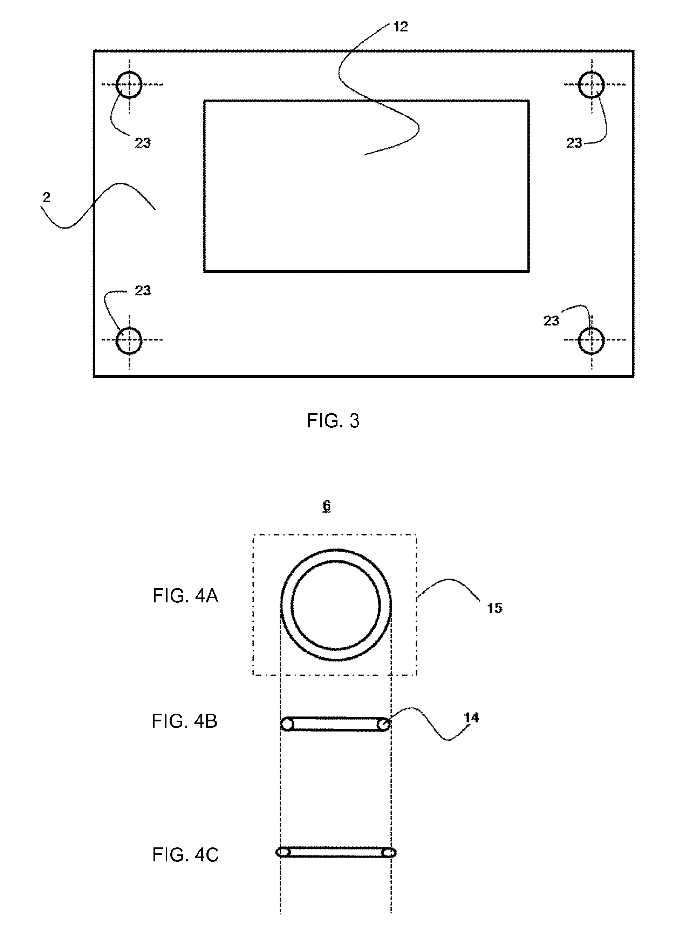

The first part of the holder is a monolithic block made of polyaryletheretherketon (PEEK), the lid is monolithic block of steel. A top view of the lid is shown in Fig. 3. The lid (2) in this embodiment is provided with a window (12) and four holes to accommodate bolt-and-nut connections (23). The window allows easy access to the micro-fluidic device and limits heat leakage due to conduction by limiting the direct contact of the micro-fluidic device with the lid. The micro-fluidic device (8) is preferably made of glass, but in a less harsh chemical environment polymeric materials are also suitable, e.g PMMA. In case the micro-fluidic device is a micro-mixer, the micro-fluidic device comprises at least two inlets, at least one outlet and a mixing region. If the micro-fluidic device is a micro-reactor, a plurality of inlets, preferably the number of inlets equals the number of reaction components, at least one out-let and a reaction region. For the present invention the interior of the micro-fluidic device is arbitrary and therefore not shown. The interior of the micro-fluidic device in the context of the present invention is considered a black box and indicated with (13).

The micro-fluidic system further comprises sealing means (6) in this case at least one 0-ring. For convenience only one O-ring is shown, but it will be evident to the skilled person that in order to establish a plurality of connections between a plurality of inlets (one of which is indicated with number 7) and at least one outlet of the micro-fluidic device (8) and the second ends (9) of the channels (10), a plurality of O-rings will be present.

Fig. 4A shows a schematic representation of the top view of an O-ring. Fig. 4B shows a schematic representation of the side view of the O-ring of Fig. 4A. It is noted that the cross-sectional area (14) of the O-ring shown in Fig 4B is circular. Suitable O-rings for the present invention are however not limited to such cross-sectional geometry. Other suitable cross-sectional geometries are (but is not limited to), e.g. square shaped, triangular, elliptical, star-shaped geometries. The sealing means are also not limited to O-rings. The top-view geometry (15) may also be (but is not limited to) e.g. elliptical, rectangular, etc. The sealing means are made of a chemically resistant material, preferably a perfluoro-elastomer, e.g. Perlast®.

The first part of the holder (1) further comprises connectors (one of which is indicated with number 11) at the first ends (20) of the plurality of channels (10). Fig. 1A shows such a connector, which is known as a nut-and-ferrule connector. A conically shaped ferrule (16) holding a tube (17) is inserted in a counteracting conically shaped hole in the first part of the holder. A nut (18) is then screwed into the first part of the holder, which is provided with screw thread (19). The conically shaped ferrule expands, clamps the tube and thus provides a sealed connection between the first end of a channel and the tube. The nut-and-ferrule connector may also be combined into a single piece, and is made of chemically resistant materials, preferably PEEK.

Fig. 1B shows the micro-fluidic system after assembling it. The required pressure to obtain a fluid tight connection that can withstand high pressures (up to 80 bar) is exerted by a number of bolt and nut connections (two of which are shown: 4a, 4b, 5a, 5b). The number of bolt-and-nut connections may however be varied. In certain cases even only one connection will suffice. The bolt and nut connections are made such that the sealing means are deformed such that the thickness of the sealing means is reduced with 5%-40% dependent on the desired operating pressure of the micro-fluidic device.

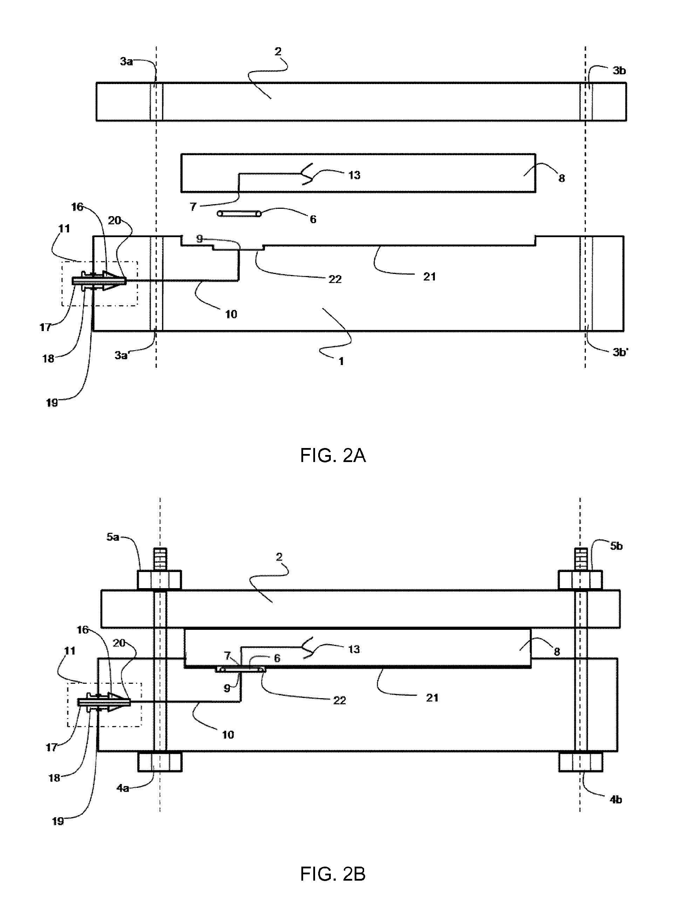

Fig. 2A shows a schematic representation of a micro-fluidic system according to the present invention, provided with a first recess (21) for accommodating the micro-fluidic device. The first recess enables easy positioning and alignment of the micro-fluidic device on the first part of the holder. At least one second recess (22) is provided for easy positioning of the sealing means. In the present case the second recesses are circular (not shown) to accommodate O-rings. The diameter of the second recesses is slightly larger than the diameter of the O-rings, to allow unrestricted mechanical and thermal expansion of the O-rings.

## Claims

1. A micro-fluidic system comprising:
a. a planar micro-fluidic device comprising a plurality of inlets and at least one out-let;
b. a holder comprising a first part being provided with a plurality of channels having first ends and second ends, the holder comprising a fixing means for clamping the micro-fluidic device;
c. sealing means being arranged to connect the plurality of inlets and the at least one out-let of the micro-reactor to the second ends of the plurality of channels;
**characterized in that** the sealing means are arranged such that a surface contact between the micro-fluidic device and the sealing means and a surface contact between the sealing means and the first part of the holder is established.

2. A micro-fluidic system according to claim 1, wherein the first part of the holder is provided with a first recess for accommodating the micro-reactor, the second ends of the plurality of channels being locate in the first recess.

3. A micro-fluidic system according to claim 2, wherein at least one second recess is provided within the first recess for accommodating the sealing means, the second ends of the plurality of channels being located in the at least one second recess.

4. A micro-fluidic system according to claim 4, wherein the planar micro-reactor has a thickness t₁, the sealing means has a thickness t₂, first recess has a depth d₁, the second recess has a depth d₂, and wherein t₁, t₂, d₁ and d₂ satisfy the formulas d₁+d₂ ≤ t₁+t₂ and 0<d₂≤0.95*t₂.

5. A micro-fluidic system according to any one of claims 1-4, wherein the first part of the holder comprises an inert polymeric material.

6. A micro-fluidic system according to claim 5, wherein the inert polymeric material is polyaryletherehterketon (PEEK).

7. A micro-fluidic system according to any one of claims 1-6, wherein the sealing means are of a chemically are of a chemically resistant material.

8. A micro-fluidic system according to claim 7, wherein the chemically resistant material is a perfluoro-elastomer.

9. A micro-fluidic system according to any one of claims 1-8, wherein the sealing means comprises at least one O-ring.

10. A micro-fluidic system according to any one of claims 1-9, wherein the fixing means comprises a lid being operatively connected to the first part of the holder and arranged to clamp the micro-reactor.

11. A micro-fluidic system according to claim 10, wherein the lid is operatively connected to the first part of the holder by means of at least one bolt-and-nut connection.

12. A micro-fluidic system according to any one of claims 10-11, wherein the lid comprises a heat conducting material.

13. A micro-fluidic system according to claim 12, wherein the heat conducting material is steel.

14. A micro-fluidic system as shown in Fig 2B.

15. Use of a micro-fluidic system according to any one of the preceding claims for mixing aggressive chemicals or performing chemical reactions that involve aggressive chemicals, the micro-fluidic system being operated at pressures up to 80 bar and temperatures between -20°C and 200°C.
